# EUROPEAN PATENT APPLICATION

(11) **EP 3 454 294 A1**
(43) Date of publication of application: **13.03.2019**
(21) Application number: 18193096.7
(22) Date of filing: 07.09.2018
(51) Int. Cl.: G06T 5/00

(54) **APPARATUS AND METHOD TO CONVERT IMAGE DATA**

(30) Priority: 08.09.2017 US 201762555710 P
(71) Applicant: Interdigital VC Holdings, Inc, Wilmington, DE 19801 (US)
(72) Inventor: ERIKSSON, Brian Charles, Los Altos, CA 94022 (US); HAMIDI-RAD, Shahab, Los Altos, CA 94022 (US); FELTMAN, Simon, Indianapolis, IN 46290 (US); YANG, Dehui, Los Altos, CA 94022 (US)
(74) Representative: Huchet, Anne

(57) **Abstract**

A system for converting image data from standard dynamic range (SDR) format to a high dynamic range (HDR) format involves partitioning input data representing an SDR image into a plurality of portions of data, wherein each portion represents a respective one of a plurality of SDR patches of the SDR image and each of the plurality of SDR patches covers a portion of the SDR image and the set of the plurality of SDR patches fully covers the SDR image; processing each of the plurality of SDR patches through a deep learning autoencoder responsive to a plurality of model weights representing a model of SDR to HDR conversion to produce a respective plurality of estimated HDR patches; and stitching the estimated HDR patches together to form an HDR image version of the SDR image.

## Description

### TECHNICAL FIELD

The present disclosure generally involves converting image data from one format to another.

### BACKGROUND

New display technology has drastically improved the potential image quality of content. Specific improvements include the ability to display a wider color gamut and a much larger brightness range (usually measured in nits). This combination is usually refered to as HDR (high-dynamic range) or Ultra HD.

Unfortunately, almost all content is currently graded for SDR (standard-dynamic range) displays. Meaning the potential advantages of HDR technology including improvements in user experience due to wider color gamut and brightness ranges are not fully realized. This results in degraded image quality, and decreased consumer motivation to purchase higher-end displays.

Currently HDR content is generated using either (A) native acquisition using HDR cameras (which is very expensive) or (B) upconversion from SDR content using specialized software. This specialized software requires trained technicians to operate and professional color grading monitors, which can cost tens of thousands of dollars. Approaches to automating conversion of SDR to HDR have been proposed that may involve defining or selecting a set of parameters to define the conversion. Such approaches may provide suitable HDR content. However, such approaches may be limited by the parameters to certain situations associated with the parameters selected or may require pristine SDR content to provide useable HDR content. That is, conversion of SDR content that includes artifacts or is corrupted may produce unsatisfactory HDR content. The result is a current lack of HDR content.

### SUMMARY

According to an aspect, an apparatus may comprise a partition module partitioning input data representing an SDR image into a plurality of portions of data, wherein each portion represents a respective one of a plurality of SDR patches of the SDR image and each of the plurality of SDR patches covers a portion of the SDR image and the set of the plurality of SDR patches fully covers the SDR image; an autoencoder processing each of the plurality of SDR patches responsive to a plurality of model weights representing a model of SDR to HDR conversion to produce a respective plurality of estimated HDR patches; and an image stitching module stitching the estimated HDR patches together to form an HDR image version of the SDR image.

According to another aspect, a method may comprise partitioning input data representing an SDR image into a plurality of portions of data, wherein each portion represents a respective one of a plurality of SDR patches of the SDR image and each of the plurality of SDR patches covers a portion of the SDR image and the set of the plurality of SDR patches fully covers the SDR image; processing each of the plurality of SDR patches in a deep learning autoencoder responsive to a plurality of model weights representing a model of SDR to HDR conversion to produce a respective plurality of estimated HDR patches; and stitching the estimated HDR patches together to form an HDR image version of the SDR image.

### BRIEF DESCRIPTION OF THE DRAWING

The present disclosure may be better understood by consideration of the detailed description below in conjunction with the accompanying figures, in which:
Figure 1 shows, in block diagram form, an example of an embodiment of a processing system or apparatus in accordance with the present disclosure;
Figure 2 shows, in block diagram form, another example of an embodiment of apparatus in accordance with the present disclosure;
Figure 3 shows, in block diagram form, an example of an embodiment of a portion of apparatus such as that shown and/or described in the present disclosure;
Figure 4 shows, in flowchart form, an example of an embodiment of a method in accordance with the present disclosure;
Figure 5 shows, in flowchart form, another example of an embodiment of a method; and
Figure 6 shows, in block diagram form, another example of an embodiment of apparatus.

In the various figures, like reference designators refer to the same or similar features.

### DETAILED DESCRIPTION

The present disclosure is generally directed to conversion of image data from one format to another different format.

While one of ordinary skill in the art will readily contemplate various applications to which aspects and embodiments of the present disclosure can be applied, the following description will focus on apparatus, systems and methods for image conversion applications such as converting standard dynamic range (SDR) images or image data to high dynamic range (HDR) images or image data. Such processing may be used in various embodiments and devices such as set-top boxes, gateway devices, head end devices operated by a service provider, digital television (DTV) devices, mobile devices such as smart phones and tablets, etc. However, one of ordinary skill in the art will readily contemplate other devices and applications to which aspects and embodiments of the present disclosure can be applied. For example, an embodiment may comprise any device that has data processing capability. It is to be appreciated that the preceding listing of devices is merely illustrative and not exhaustive.

In general, an embodiment involves a deep learning approach to up-convert image content in SDR color space to image content in HDR color space using a training corpus of content in both SDR and HDR. An embodiment may comprise a convolutional neural networks (CNN) including an autoencoder using a training corpus to learn how to extract relevant structural information from image patches and predict pixel values in HDR space. An embodiment may provide a non-parametric approach, i.e., image conversion is not based on a predetermined set of parameters. For example, an embodiment involves learning parameters and parameter values that produce the best fit conversion result, thereby providing flexible conversion that can be used in systems that efficiently implement deep learning architectures such as graphics processing units (GPU).

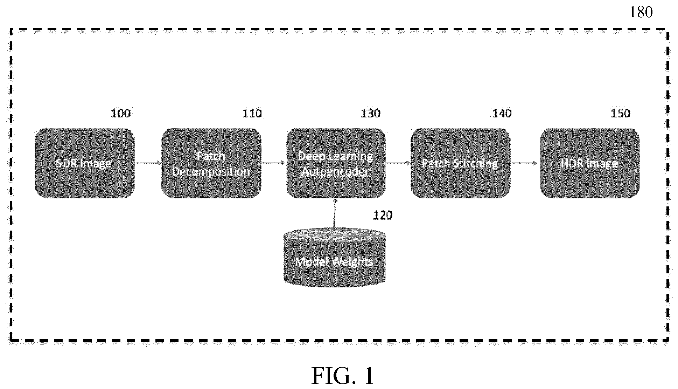

In more detail in reference to the drawings, Figure 1 shows an example of an embodiment of apparatus. In Figure 1, apparatus 180 includes block 100 representing or providing an input image in SDR color space, hereinafter referred to as an SDR image. The SDR image provides original standard dynamic range content and may be, for example, a single frame from HDTV content in 1080p resolution.

The SDR image passes from input 100 to block 110 where patch decomposition, or partitioning of the input image, occurs. To limit or reduce memory requirements during processing, rather than processing the complete SDR input image at one time, a series of patches are created from the input image. The creation of patches may also be considered to be partitioning of the input image into the patches or portions of the input image and block 110 may also be referred to herein as a partitioning module. The set of patches cover the complete original image. For example, block 110 processes a 1080p frame to create a series of 128 x 128 x 3 patches (i.e., 128 pixels x 128 pixels x 3 color channels per pixel (e.g., R, G, B)) with a 50% redundancy or overlap on each patch. Other patch sizes and redundancy values may be suitable and are contemplated. For patch sizes above 256 x 256, memory requirements may become prohibitive with current technology and/or scalability may be problematic. For patch sizes below 32 x 32, accuracy may be less than required or desirable.

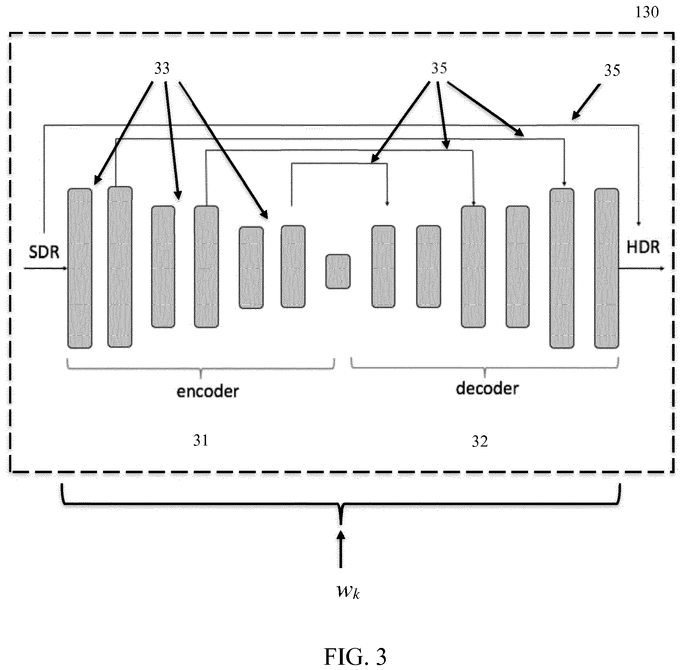

The image patches created by block 110 pass to block 130 which may be a deep learning autoencoder, e.g., a convolutional neural network. An example of an embodiment of block 130 comprises a convolutional autoencoder with skip connections as explained futher below in regard to Figure 3. However, other forms or autoencoders may be used for block 130. Block 130 processes an SDR patch of size 128 x 128 x 3 from block 110 and produces an HDR patch of size 128 x 128 x 3.

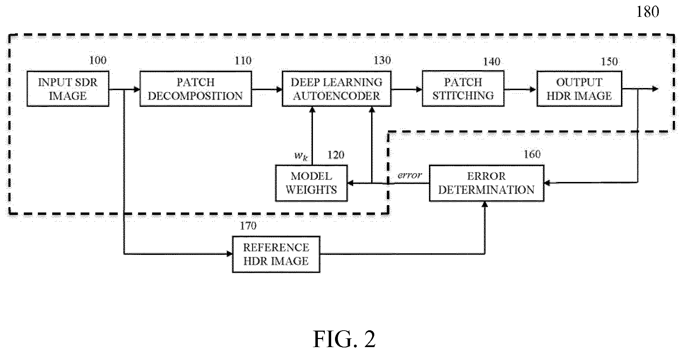

The processing of image patches in block 130 occurs based on model weights provided by block 120. The model weights that produce a best fit of conversion of SDR inpu to HDR output are derived during a training operation that, as explained in more detail below in regard to Figure 2, processes a plurality of known SDR images and a corresponding plurality of respective HDR images through block 130.

The output of block 130 comprises a plurality of estimated HDR patches corresponding to respective ones of the plurality of SDR patches. In block 140, the series of estimated HDR patches from block 130 are stitched together to form an output HDR image at block 150 corresponding to the input SDR image at block 100. The stitching operation performed in block 140 may comprise calculating a median value for all pixel values.

As mentioned above, the conversion model weights are determined during a training operation. That is, Figure 1 illustrates an embodiment of apparatus for SDR to HDR conversion following training. An example of an embodiment of apparatus providing for training is shown in Figure 2. In Figure 2, apparatus 180 corresponds to, and includes features similar to, block 180 in Figure 1 and will not be explained in detail again here. Also in Figure 2, during a training operation, an input SDR image at block 100 is provided from a corpus of known SDR images. The known SDR image is processed through apparatus 180 as explained above in regard to Figure 1 using a initial set of model weights *wₖ* provided by block 120. At block 170, a reference or known HDR image that corresponds to the known SDR image is selected from the training corpus of images and provided to block 160. Block 160 determines an error or difference between the known HDR image from block 170 and the output HDR image produced at block 150 in response to the known SDR image. The result or *error* determined at block 160 is provided to both block 120 and 130 for correction of the set of model weights. The correction or training of the model weights provided by block 120 and utilized in autoencoder 130 may occur by backpropagation of the errors using an approach such as stochastic gradient descent.

A training corpus of images suitable for training of apparatus such as the example of an embodiment shown in Figure 2 may comprise a plurality of known SDR images and known HDR images that correspond to respective ones of the known SDR images. The training corpus may be large, e.g., 200,000 images. Training may occur in batches. For example, a batch of 32 images from the training corpus is processed through autoencoder 130 and the model weights adjusted. Batches continue to be processed and model weights adjusted until the complete corpus has been processed. Processing of the complete corpus once comprises an epoch of training. Multiple epochs may be processed. That is, the complete corpus may be processed multiple times using the batch processing approach and the model weights continually adjusted to refine the model weights and improve the quality of the HDR image produced by the conversion process. As described above, the adjustment of the weights may occur by backpropagation of errors using an approach such as stochastic gradient descent to determine errors and adjust the weights accordingly.

As described above in regard to Figures 1 and 2, image patches created by image decomposition block 110 pass to block 130 which may be a deep learning autoencoder. Various types of autoencoder architectures may be used for autoencoder 130. Figure 3 shows an example of an embodiment of autoencoder 130 comprising a convolutional neural network (CNN) or convolutional autoencoder with skip connections. In Figure 3, an input SDR image passes through an encoder section 310 that encodes the SDR image data, e.g., and SDR image patch as described above, to produce a reduced-dimension representation of the image data at the output of encoder 310. The output of encoder 310 is processed or decoded through decoder section 320 to produce estimated HDR image data, e.g., an estimated HDR image patch as described above. Encoder 310 and decoder 320 each include multiple levels of processing such as levels 330 illustrated in Figure 3. Processing through encoder 310 and 320 occurs based on model weights *wₖ* such as those provided by block 120 in Figures 1 and 2. The model weights *wₖ* are determined during training such as that described above in regard to Figure 2 and are provided to the processing levels, e.g., levels 330, as illustrated in Figure 3 to control the processing that occurs in autoencoder 130 during image conversion.

Also shown in Figure 3, autoencoder 130 may include one or more skip connections such as 350 and 351 in Figure 3. Skip connections may be utilized to provide a feed-forward path through the autoencoder to bypass certain levels of processing. Passing certain data forward without one or more levels of processing, e.g., image detail information, may produce improvements in the estimated output image. In addition, one of the skip connections, e.g., connection 351 in Figure 3, may provide for feeding forward the input SDR image patches to the output to enable producing the estimated HDR patches by combining a residual value output by the autoencoder with the input SDR image patches. That is, the autoencoder may be trained as described herein to produce a residual value representing a difference between an SDR image patch and a corresponding HDR image patch. Then, to produce each estimated HDR image patch, using a skip connection each input SDR image patch is fed forward to the output of the autoencoder and combined with the corresponding residual value produced by the autoencoder.

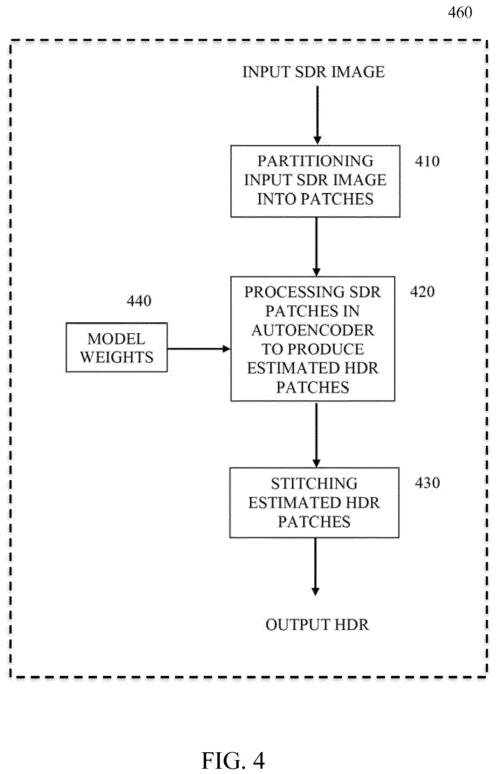

Figure 4 shows an example of an embodiment of a method in accordance with the present disclosure. In Figure 4, a method of image conversion 460 includes partitioning an input SDR image at 410 into SDR image patches. The partitioning may occur as described above in regard to Figures 1 and 2. Creating image pataches at 410 is followed by processing of the patches at 420. The processing at 420 produces estimated HDR patches by, for example, a deep learning neural network process and based on SDR-to-HDR conversion model weights provided by 440 to the processing at 420. The model weights are determined by a training operation as described above using a corpus of known SDR and HDR images. The estimated HDR image patches produced at 420 undergo a stitching operation at 430 to produce an estimated output HDR image.

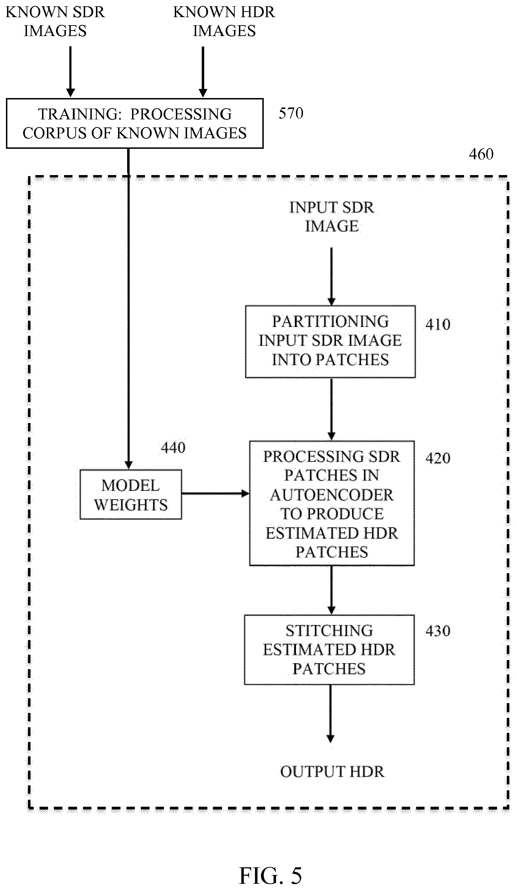

Figure 5 shows another example of an embodiment of a method. The method of Figure 5 includes method 460 of Figure 4 or features similar to those of that method that were described above. Also in Figure 5, 460 is preceded by a training operation 570 where processing of a corpus of known SDR and HDR images occurs as described above to produce model weights 440 on which processing at 420 is based.

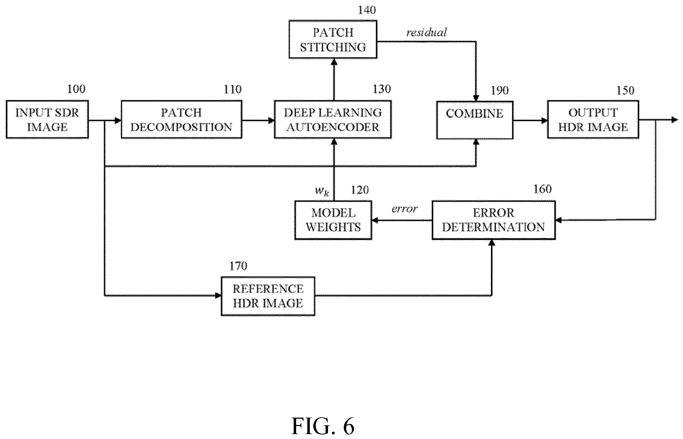

Figure 6 shows another example of an embodiment of apparatus. In Figure 6, blocks 100, 110, 120, 150, 160 and 170 operate in a manner similar to that described above in regard to Figures 1 through 5. However, rather than producing estimated HDR image patches at autoencoder 130, the training produces model weights controlling autoencoder 130 to produce residual values or residual image patches for each input SDR image patch. Each residual image patch represents a difference between the SDR input image patch and an estimated HDR image. The residual patches produced by autoencoder 130 may be combined by patch stitching at block 140 to produce a residual image representing a difference between the input SDR image and an estimated HDR image. The residual image is combined with the SDR input image at 190 to produce an estimated HDR image.

The present description illustrates various aspects and embodiments. It will thus be appreciated that those skilled in the art will be able to devise various arrangements that, although not explicitly described or shown herein, are included within the spirit and scope of the present description. For example, according to an aspect, an apparatus may comprise a partition module partitioning input data representing an SDR image into a plurality of portions of data, wherein each portion represents a respective one of a plurality of SDR patches of the SDR image and each of the plurality of SDR patches covers a portion of the SDR image and the set of the plurality of SDR patches fully covers the SDR image; an autoencoder processing each of the plurality of SDR patches responsive to a plurality of model weights representing a model of SDR to HDR conversion to produce a respective plurality of estimated HDR patches; and an image stitching module stitching the estimated HDR patches together to form an HDR image version of the SDR image.

According to another aspect, an apparatus may comprise a partition module partitioning input data representing an SDR image into a plurality of portions of data, wherein each portion represents a respective one of a plurality of SDR patches of the SDR image and each of the plurality of SDR patches covers a portion of the SDR image and the set of the plurality of SDR patches fully covers the SDR image; an autoencoder processing each of the plurality of SDR patches responsive to a plurality of model weights representing a model of SDR to HDR conversion to produce a respective plurality of estimated residual values wherein each of the plurality of residual values represents a difference between one of the plurality of SDR patches and a respective patch of an HDR image corresponding to the SDR image; combiningg each of the plurality of residual values with a respective one of the plurality of SDR patches to produce a plurality of estimated HDR patches; and an image stitching module stitching the plurality of estimated HDR patches together to form an HDR image version of the SDR image.

In an embodiment, model weights may be learned during a training operation using a stochastic gradient descent on a training corpus of images in both SDR and HDR.

In an embodiment, an autoencoder may comprise a convolution autoencoder with one or more skip connections.

In an embodiment, each of a plurality of SDR patches and a plurality of estimated HDR patches may have a dimension of 128x128x3 and a 50% redundancy.

In an embodiment, an SDR image may comprise a single frame of HDTV content in 1080p resolution.

In an embodiment, a training corpus of images may comprise a plurality of known SDR images and a plurality of respective known HDR images, and the training operation may comprise processing a set of training data through an autoencoder during an epoch, and wherein the set of training data includes a plurality of batches of images included in the training corpus of images, wherein each batch comprises a subset of the plurality of images included in the training corpus, and repeating the processing for a plurality of epochs.

In an embodiment, an SDR image may comprise image data in the BT.709 color space and an HDR image may comprise image data in the BT.2020 color space.

In an embodiment, an autoencoder having one or more skip connections may process a plurality of SDR image patches to produce a respective plurality of residual values each representing a difference between one of the plurality of SDR patches and a respective patch of an HDR image, and one of the skip connections may provide each of the plurality of SDR image patches to the output of the autoencoder to be combined with a respective one of the plurality of residual values to produce a plurality of estimated HDR image patches.

According to another aspect, a method of converting an SDR image to an HDR image may comprise partitioning input data representing an SDR image into a plurality of portions of data, wherein each portion represents a respective one of a plurality of SDR patches of the SDR image and each of the plurality of SDR patches covers a portion of the SDR image and the set of the plurality of SDR patches fully covers the SDR image; processing each of the plurality of SDR patches in a deep learning autoencoder responsive to a plurality of model weights representing a model of SDR to HDR conversion to produce a respective plurality of estimated HDR patches; and stitching the estimated HDR patches together to form an HDR image version of the SDR image.

According to another aspect, a method of converting an SDR image to an HDR image may comprise partitioning input data representing an SDR image into a plurality of portions of data, wherein each portion represents a respective one of a plurality of SDR patches of the SDR image and each of the plurality of SDR patches covers a portion of the SDR image and the set of the plurality of SDR patches fully covers the SDR image; processing each of the plurality of SDR patches in a deep learning autoencoder responsive to a plurality of model weights representing a model of SDR to HDR conversion to produce a respective plurality of estimated residual values wherein each of the plurality of residual values represents a difference between one of the plurality of SDR patches and a respective patch of an HDR image corresponding to the SDR image; combing each of the plurality of residual values with a respective one of the plurality of SDR patches to produce a plurality of estimated HDR patches; and stitching the estimated HDR patches together to form an HDR image version of the SDR image.

In an embodiment, a method may include a processing step preceded by learning model weights using a stochastic gradient descent on a training corpus of images in both SDR and HDR.

In an embodiment, a method may include processing using an autoencoder comprising a convolution autoencoder with one or more skip connections.

In an embodiment, a method may include each of a plurality of SDR patches and a plurality of estimated HDR patches having a dimension of 128x128x3 and 50% redundancy.

In an embodiment, a method may include processing an SDR image comprising a single frame of HDTV content in 1080p resolution.

In an embodiment, a method may include a training operation processing a training corpus of images comprising a plurality of known SDR images and a plurality of respective known HDR images, and the training operation may further include processing the set of training data through an autoencoder during an epoch having a plurality of batches of images included in the training corpus of images, wherein each batch comprises a subset of the plurality of images included in the training corpus, and wherein the embodiment may further include repeating the processing for a plurality of epochs.

In an embodiment, a method may include processing an SDR image having image data in the BT.709 color space and an HDR image having image data in the BT.2020 color space.

In an embodiment, a method may include processing each of a plurality of SDR patches using a deep learning autoencoder having one or more skip connections and may further include processing the plurality of SDR image patches using the autoencoder to produce a respective plurality of residual values each representing a difference between one of the plurality of SDR patches and a respective patch of an HDR image, and wherein one of the skip connections provides each of the plurality of SDR image patches to the output of the autoencoder to be combined with a respective one of the plurality of residual values to produce a plurality of estimated HDR image patches.

According to another aspect, a computer-readable medium may comprise instructions thereon which, when executed by a computer, cause the computer to carry out a method in accordance with any of the aspects and/or embodiments in accordance with the present disclosure.

All examples and conditional language recited herein are intended for pedagogical purposes to aid the reader in understanding the present disclosure and the concepts contributed by the inventor(s) to furthering the art, and are to be construed as being without limitation to such specifically recited examples and conditions.

Moreover, all statements herein reciting features, aspects, and embodiments, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

Herein, the phrase "coupled" is defined to mean directly connected to or indirectly connected with through one or more intermediate components. Such intermediate components may include both hardware and software based components.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. Functionalities provided by the various recited means are combined and brought together in the manner defined by the claims. It is thus regarded that any means that can provide those functionalities are equivalent to those shown herein.

Reference in the specification to "one embodiment" or "an embodiment", as well as other variations thereof, means that a particular feature, structure, characteristic, and so forth described in connection with the embodiment is included in at least one embodiment in accordance with the present disclosure. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

It is to be understood aspects, embodiments and features in accordance with the present disclosure may be implemented in various forms of hardware, software, firmware, special purpose processors, or combinations thereof, e.g., as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the programming used. Given the teachings herein, one of ordinary skill in the pertinent art will be able to contemplate these and similar implementations or configurations.

Although the illustrative embodiments have been described herein with reference to the accompanying drawings, it is to be understood that the present disclosure is not limited to those precise embodiments, and that various changes and modifications may be effected therein by one of ordinary skill in the pertinent art without departing from the scope or spirit of the present disclosure. All such changes and modifications are intended to be included within the scope of the appended claims.

## Claims

1. Apparatus comprising:
a partition module (110) partitioning input data representing an SDR image into a plurality of portions of data, wherein each portion represents a respective one of a plurality of SDR patches of the SDR image and each of the plurality of SDR patches covers a portion of the SDR image and the set of the plurality of SDR patches fully covers the SDR image;
an autoencoder (130) processing each of the plurality of SDR patches responsive to a plurality of model weights representing a model of SDR to HDR conversion to produce a respective plurality of estimated HDR patches; and
an image stitching module (140) stitching the estimated HDR patches together to form an HDR image version of the SDR image.

2. The apparatus of claim 1, wherein the apparatus performs a training operation using a stochastic gradient descent on a training corpus of images in both SDR and HDR to learn the model weights.

3. A method comprising:
partitioning (410) input data representing an SDR image into a plurality of portions of data, wherein each portion represents a respective one of a plurality of SDR patches of the SDR image and each of the plurality of SDR patches covers a portion of the SDR image and the set of the plurality of SDR patches fully covers the SDR image;
processing (420) each of the plurality of SDR patches in a deep learning autoencoder responsive to a plurality of model weights representing a model of SDR to HDR conversion to produce a respective plurality of estimated HDR patches; and
stitching (430) the estimated HDR patches together to form an HDR image version of the SDR image.

4. The method of claim 3, further comprising learning (570) the model weights during a training operation prior to the processing using a stochastic gradient descent on a training corpus of images in both SDR and HDR.

5. The apparatus of claim 1 or 2 or the method of claim 3 or 4, wherein the autoencoder comprises a convolution autoencoder with one or more skip connections.

6. The apparatus of any of claims 1, 2 or 5 or the method of any of claims 3 to 5, wherein each of the plurality of SDR patches and the plurality of estimated HDR patches has a dimension of 128x128x3 and a 50% redundancy.

7. The apparatus of any claims 1, 2, 5 or 6 or the method of any of claims 3 to 6, wherein the SDR image comprises a single frame of HDTV content in 1080p resolution.

8. The apparatus of any of claims 2 or 5 to 7 or the method of any of claims 4 to 7 wherein the training corpus of images comprises a plurality of known SDR images and a plurality of respective known HDR images, and the training operation comprises processing the training corpus through the autoencoder during an epoch comprising a plurality of batches of images included in the training corpus of images, wherein each batch comprises a subset of the plurality of images included in the training corpus, and repeating the processing for a plurality of epochs.

9. The apparatus of any of claims 1, 2, or 5 to 8 or the method of any of claims 3 to 8, wherein the SDR image comprises image data in the BT.709 color space and the HDR image comprises image data in the BT.2020 color space.

10. The apparatus or method of any of claims 5 to 9 wherein the autoencoder processes the plurality of SDR image patches to produce a respective plurality of residual values each representing a difference between one of the plurality of SDR patches and a respective patch of an HDR image, and wherein one of the skip connections provides each of the plurality of SDR image patches to the output of the autoencoder to be combined with a respective one of the plurality of residual values to produce the plurality of estimated HDR image patches.

11. A computer-program product storing instructions which, when executed by a computer, cause the computer to:
partition input data representing an SDR image into a plurality of portions of data, wherein each portion represents a respective one of a plurality of SDR patches of the SDR image and each of the plurality of SDR patches covers a portion of the SDR image and the set of the plurality of SDR patches fully covers the SDR image;
process each of the plurality of SDR patches using a model of a deep learning autoencoder and based on a plurality of model weights representing a model of SDR to HDR conversion to produce a respective plurality of estimated HDR patches; and
stitching the estimated HDR patches together to form an HDR image version of the SDR image.

12. The computer program product of claim 11, further storing instructions which, when executed by the computer, cause the computer to carry out the method of any of claims 4 to 10.

13. An electronic device including the apparatus of any of claims 1, 2, or 5 to 10 or configured to perform a method according to any of claims 3 to 10.

14. The electronic device of claim 13 comprising one of a computer, a set-top box, a gateway device, a head-end device, a digital television, a mobile phone and a tablet.
